# EUROPÄISCHE PATENTANMELDUNG

(11) **EP 0 728 574 A2**
(43) Veröffentlichungstag der Anmeldung: **28.08.1996**
(21) Anmeldenummer: 96101979.1
(22) Anmeldetag: 12.02.1996
(51) Int. Cl.: B32B 5/20

(54) **Sandwich-Strukturelement aus Polyurethan und Verfahren zu dessen Herstellung**

(30) Priorität: 23.02.1995 DE 19506255
(71) Anmelder: BAYER AG, 51368 Leverkusen (DE)
(72) Erfinder: Grimm, Wolfgang, D-51381 Leverkusen (DE); Hausmann, Heinz, Dr., D-42799 Leichlingen (DE); Mandel, Hans, D-51399 Burscheid (DE); Prolingheuer, Ernst-Christoph, Dr., D-51399 Burscheid (DE)

(57) **Zusammenfassung**

Zur Herstellung von durch schichtweisen Auftrag auf ein Substrat erzeugten Sandwich-Strukturelementen aus massiven Polyurethanschichten und Polyurethanschaumschichten wird vorgeschlagen, daß mindestens die massiven Polyurethanschichten 15 bis 55 Gew.-% Glimmer enthalten. Es werden besonders formgenaue und gut haftende Sandwich-Strukturelemente erhalten. Der Effekt wird auf eine inhomogene Härtungsreaktion der Polyurethanreaktivmischung aufgrund der Anwesenheit von Glimmer zurückgeführt.

## Beschreibung

Die vorliegende Erfindung betrifft ein selbsttragendes Sandwich-Strukturelement aus mindestens einer massiven Polyurethanschicht und mindestens einer Polyurethanschaumschicht.

Gemäß WO 94/14587 wurde bereits vorgeschlagen, Sandwich-Strukturelemente aus Zweikomponenten-Reaktionskunststoffen durch schichtweisen Sprühauftrag entsprechender Reaktivmischungen auf ein Substrat zu erzeugen. Als Reaktivkunststoffe werden Polyharnstoff und Mischungen aus Polyurethan und Polyester beschrieben. Solche Strukturelemente können z.B. aus zwei massiven Reaktivkunststoffschichten und einer dazwischen liegenden Reaktivkunststoff-Schaumschicht bestehen. Die Vorteile der Erzeugung von Sandwich-Strukturen durch schichtweisen Sprayauftrag von Zweikomponenten-Reaktivsystemen ergeben sich aus der schnellen Reaktionszeit dieser Systeme, der Verarbeitbarkeit bei Umgebungstemperatur und der geringen Ansprüche, die an die Form bzw. das Substrat zu stellen sind. Ferner lassen sie sich aus einheitlichem Material herstellen, wobei lediglich zur Erzeugung der Schaum-Zwischenschicht die Reaktivmischung durch Zugabe eines Treibmittels modifiziert werden muß.

Gemäß EP-A 589 343 wurde auch bereits vorgeschlagen, Sanitärartikel, deren Sicht- und Gebrauchsoberfläche aus Polymethylmethacrylat besteht, mit einer tragenden Polyurethan-Sandwich-Struktur zu versehen, wobei der Auftrag der Schichten mittels einer Zweistoff-Mischdüse direkt auf das vorgeformte Polymethylmethacrylat-Substrat schichtweise erfolgt.

Ein in der EP-A 589 343 angesprochenes Problem ist die Haftung der Polyurethan-Sandwich-Struktur an der Polymethylmethacrylat-Schicht. Gemäß EP-A 589 343 wird vorgeschlagen, das Polymethylmethacrylat-Substrat mit einer Lösung eines unvernetzten elastischen Polymerharzes von starker Kristallisationsneigung zu behandeln. Weitere Vorschläge zur Lösung des Haftungsproblems zwischen Polyurethan und Polymethylmethacrylat (PMMA) sind in der EP-A 589 343 als Stand der Technik referiert.

Ein weiteres Problem schnellreagierender Polyurethansysteme ist die bei der Polyisocyanat-Polyadditionsreaktion frei werdende Wärme, die aufgrund der Geschwindigkeit der Reaktion und der Wärmeisolationseigenschaften der mit dem Sandwich aufgebauten Schaumschichten nicht schnell genug abgeführt werden kann. In Abhängigkeit vom Schichtaufbau des Sandwich werden leicht Temperaturen von 150°C oder mehr erreicht.

Die Temperaturerhöhung während des Aushärtens der Sandwich-Struktur ist insbesondere dann nachteilig, wenn die Sandwich-Struktur auf ein thermoplastisches Material aufgebracht wird, z.B. darf die Temperatur während der Beschichtung von PMMA 80°C nicht überschreiten.

Im Prinzip wäre es denkbar, Polyurethanreaktivmischungen zu entwickeln, die aufgrund eines geringeren Katalysatorgehaltes langsamer aushärten. Bei solchen Systemen würde aber auch der Reaktionsbeginn zeitlich verschoben, so daß das anfängliche Fließverhalten so verändert würde, daß beim Auftragen auf gegen die Horizontale geneigte oder senkrechte Flächen ablaufen würde.

Ein weiteres Problem insbesondere bei der Herstellung großflächiger Sandwich-Strukturelemente sind Verwerfungen, die auf Schrumpfungseffekte beim Aushärten der Polyurethanreaktivmischung zurückgeführt werden. Bei schichtweiser Erzeugung der Strukturelemente tritt in den Schichten Schrumpfung zu unterschiedlichen Zeiten ein.

Es wurde nun gefunden, daß die genannten Nachteile dadurch überwunden werden können, daß eine Polyurethanreaktivmasse eingesetzt wird, die 10 bis 55 Gew.-%, vorzugsweise 25 bis 50 Gew.-%, insbesondere 30 bis 40 Gew.-% Glimmer enthält.

Gegenstand der vorliegenden Erfindung sind demgemäß selbsttragende Sandwich-Strukturelemente aus mindestens einer massiven Polyurethanschicht und mindestens einer Polyurethanschaumschicht, die 10 bis 55 Gew.-% Glimmer enthalten.

Gegenstand der vorliegenden Erfindung ist auch ein Verfahren zur Herstellung von selbsttragenden Sandwich-Strukturelementen aus mindestens einer massiven Polyurethanschicht und mindestens einer Polyurethanschaumschicht, das dadurch gekennzeichnet ist, daß die massiven Schichten und die Schaumschichten durch aufeinanderfolgendes Auftragen einer Polyurethanreaktivmischung auf ein geeignetes Substrat erzeugt werden, wobei die Polyurethanreaktivmischung feinteiligen Glimmer in einer Menge von 10 bis 55 Gew.-%, bezogen auf die Mischung enthält.

Die Teilchengröße des Glimmers kann zwischen 5 und 80 µm liegen.

Die erfindungsgemäße, glimmerenthaltende Polyurethanreaktivmischung zeigt im Vergleich zu einer gleichen Menge gemahlene Glasfasern enthaltenden Reaktivmischung (Glasfaser und Glimmer besitzen etwa gleiche spezifische Wärme) eine um 25 % reduzierte Temperaturanstiegsrate zu Beginn der Reaktion auf. Die Zeit bis zum Erreichen der Maximaltemperatur ist um ein Drittel verlängert. Auch der dynamisch gemessene Viskositätsanstieg ist entsprechend verzögert. Dies läßt auf einen inhibierenden Effekt des Glimmers auf die Polyisocyanat-Polyadditionsreaktion schließen. Das Auftragsverhalten der glimmerhaltigen Reaktivmischung scheint aber nicht verändert. Ferner wird eine hervorragende Haftung auf PMMA auch ohne besondere haftungsverbessernde Maßnahmen erzielt.

Es wird angenommen, daß der Glimmer einen inhomogenen Reaktionsverlauf der Polyurethan-Reaktivmischung bewirkt, derart, daß die Reaktivmischung auf der Oberfläche der Glimmerteilchen und deren unmittelbarer Umgebung verzögert aushärtet, die Reaktion zwischen den Glimmerteilchen jedoch nicht inhibiert ist. Dies würde erklären, warum das nicht-dynamische Fließverhalten der Reaktivmischung im wesentlichen unverändert bleibt. Die guten Haftungseigenschaften wären dadurch erklärbar, daß die Reaktivmischung aufgrund der in der Nähe der Glimmerteilchen verzögerten Aushärtung innerhalb der bereits ausgehärteten Polymermatrix beweglich bleiben und hierdurch Schrumpfungsreaktionen, die die Haftung an dem Substrat stören, kompensiert werden können. Ein solcher Effekt würde es auch erklären, warum es nicht gelingt, die erfindungsgemäß gute Haftung, z.B. auf PMMA-Substraten sowie Mehrschichtpanele mit erfindungsgemäß geringer Verwerfung aufgrund von Schrumpfungseffekten mittels Reaktivmischungen herzustellen, in denen der Glimmer durch andere Füllstoffe ersetzt ist bzw. mittels Füllstoff-freien Reaktivsystemen herzustellen.

Die erfindungsgemäßen Sandwich-Strukturen können aus einer beliebigen Anzahl von Schichten bestehen. Vorzugsweise bestehen sie abwechselnd aus massiven Polyurethanschichten und Polyurethanschaumschichten. Bevorzugt ist eine ungerade Zahl von Schichten, wobei die jeweils äußersten Schichten Massivschichten sind. Besonders bevorzugt ist eine Anzahl von 3 bis 5 Schichten.

Die Massivschichten können eine Dicke von 0,5 bis 10 mm, vorzugsweise 1 bis 5 mm aufweisen. Unter Massivschicht soll erfindungsgemäß eine glimmerhaltige Polyurethanschicht mit einer Dichte von 0,9 bis 1,2 verstanden werden.

Die Schaumschicht soll vorzugsweise eine Dicke von 0,5 bis 30 mm aufweisen, insbesondere bevorzugt sind Schaumschichtdicken zwischen 2 und 20 mm. Die Schaumschicht kann erfindungsgemäß eine Dichte von 0,05 bis 0,8 aufweisen, besonders bevorzugt 0,1 bis 0,6, insbesondere bevorzugt 0,1 bis 0,4. Bevorzugt sind geschlossenporige Schäume.

Erfindungsgemäß ist es nicht erforderlich, daß auch die Schaumschicht Glimmer enthält. Die Schaumschicht kann z.B. andere Füllstoffe als Glimmer, z.B. Melaminharze oder gemahlene Polyurethanabfälle, enthalten oder auch Füllstoff-frei ausgebildet sein. Bevorzugt bestehen die Sandwich-Strukturen jedoch aus einem einheitlichen Material.

Die Erzeugung der erfindungsgemäßen Sandwich-Strukturen erfolgt durch schichtweisen Auftrag auf ein Substrat, vorzugsweise durch Sprühen. Dabei werden die Komponenten der Polyurethanreaktivmischung, insbesondere Isocyanat, füllstoffhaltiges Polyolgemisch, gegebenenfalls getrennt das Treibmittel, mittels getrennter Leitungen einem geeigneten Mischaggregat dosiert zugeführt, wobei der Auslaß des Mischaggregates als Sprühkopf ausgebildet ist. Als Mischaggregat sind sowohl nach der Gegenstrom-Injektionsmethode arbeitende Hochdruckmischaggregate als auch Niederdruck-Rührwerksmischaggregate geeignet; siehe z.B. Becker/Braun: Kunststoff-Handbuch, Band 7: Polyurethane, 1993, Seiten 174 bis 186. Gegebenenfalls kann am Mischkopfauslaß eine zusätzliche Sprühvorrichtung vorgesehen sein, z.B. in Form einer den Auslaß des Mischaggregates konzentrisch umgebenden Druckluftdüse. Die mittels der Sprühvorrichtung erzeugten Tröpfchen weisen vorzugsweise einen Durchmesser von 0,2 bis 2 mm, insbesondere bevorzugt 0,5 bis 1,5 mm auf.

Jede der Massiv- und Schaumschichten kann dabei vorteilhaft durch Aufsprühen der Reaktivmischung in mehreren Lagen erzeugt werden, so daß, insbesondere wenn dickere Schichten erforderlich sind, ein Ablaufen der jeweils noch flüssigen, noch nicht ausreagierten Lage von gegen die Horizontale geneigten Auftragsflächen vermieden wird. Dabei erfolgt der Auftrag der aufeinanderfolgenden Lagen jeweils "naß in naß", d.h. in einem noch nicht vollständig ausreagierten Zustand der vorher aufgetragenen Lage, insbesondere vor Eintritt der Klebfreiheit der jeweils vorigen Lage.

Auch der Auftrag der ersten Lage einer Schaumschicht auf die letzte Lage der darunter liegenden Massivschicht erfolgt vorzugsweise "naß in naß", d.h. bevor Klebfreiheit der Massivschicht eingetreten ist. Der Sprühauftrag der ersten Lage einer Massivschicht auf die letzte Lage einer Schaumschicht kann ohne Nachteil erfolgen, wenn die Schaumschicht bereits ausreagiert ist, bzw. Klebfreiheit eingetreten ist.

Der Auftrag der Schichten der Sandwich-Struktur kann durch einen oder mehrere Mischaggregate erfolgen. Bei einer aus im wesentlichen identischen Material bestehenden Sandwich-Struktur kann es vorteilhaft sein, mindestens einen Mischkopf vorzusehen, bei dem die zuzuführenden Komponenten der Reaktivmischung während des Auftrags derart veränderbar sind, daß aus diesem Mischkopf alternierend Massiv-Polyurethan und Polyurethanschaum erzeugt werden können.

Die Erfindung ist nicht auf Sandwich-Strukturen beschränkt, bei denen sich die jeweiligen Schichten über die gesamte Fläche der Struktur erstrecken. Vielmehr kann es vorteilhaft sein, die Schaumschicht durchdringende Massiv-Polyurethanstege vorzusehen, die der Struktur eine besonders gute Scherstabilität verleihen. Ferner kann es zweckmäßig sein, die Schaumschicht mit unterschiedlichen Schaumdichtebereichen zu versehen, z.B. in dem die Treibmitteldosierung einstellbar veränderbar ausgeführt wird.

Ferner ist es erfindungsgemäß möglich, zwischen verschiedenen Lagen und/oder Schichten der Sandwich-Struktur Verstärkungselemente und/oder Verankerungselemente einzulegen. Z.B. können für Verstärkungszwecke Glasfaser-Strands oder Glasfasergewebe auf eine noch nicht ausreagierte Lage aufzulegen und diese durch den nachfolgenden Auftrag einer weiteren Lage in das Sandwich-Element einzuschließen.

Das Substrat, auf dem die Sandwich-Struktur erzeugt wird, kann eine nach Aushärten der Sandwich-Struktur zu entfernende Form sein, die vor dem Schichtauftrag mit einem Trennmittel versehen ist.

Vorzugsweise handelt es sich bei dem Substrat um einen Teil des Endproduktes, mit dem das Sandwich-Strukturelement einen Verbundkörper bildet. Vorzugsweise handelt es sich bei dem Substrat um ein Formteil aus PMMA, das die Sicht- und Gebrauchsfläche eines Sanitärartikels bildet. Es wurde gefunden, daß die erfindungsgemäßen Glimmer enthaltenden Sandwich-Strukturelemente eine hervorragende Haftung zu PMMA-Formteilen aufweisen, wenn diese als Substrat für die schichtweise Erzeugung der Strukturelemente eingesetzt werden. Für die Erzeugung der hervorragenden Haftung ist es ausreichend, die zu beschichtende PMMA-Oberfläche mit einem Ethanol-getränktem Lappen zu reinigen, damit diese fett- und staubfrei sind.

Die erfindungsgemäßen Sandwich-Strukturen sind nicht auf solche mit gleichmäßiger Dicke der einzelnen Schichten beschränkt. Vielmehr können die Schichten je nach Anforderungen unterschiedlich dick ausgebildet werden; auch kann jede einzelne Schicht in ihrer Dicke variieren. Ferner ist es nicht erforderlich, daß sich eine Schicht kontinuierlich durch das Strukturelement erstreckt. Z.B. ist es möglich, das Aufsprühen der Reaktivmischung so zu steuern, daß sich in dem Strukturelement Schauminseln bilden, die durch Massiv-Stege, die die Massivschichten miteinander verbinden, durchdrungen sind.

Als Substrate sind ferner Kunststoff- oder Metallteile, z.B. aus dem Automobilbereich geeignet.

Ferner können die erfindungsgemäßen Sandwich-Strukturen in Form von eindimensional endlosen Flächenelementen hergestellt werden, indem der Auftrag der Schichten auf ein bewegtes Transportband erfolgt, gegebenenfalls auf eine auf dem Transportband bewegte Unterlage, auf der die Beschichtung haftet. Geeignete Unterlagen sind strukturierte oder unstrukturierte Folien aus Papier, Kunststoff oder Aluminium oder auch Stahlbleche. Aus solchen endlosen Sandwich-Strukturelemente werden Konstruktionselemente durch Sägen oder Schneiden hergestellt.

Erfindungsgemäß ist es ferner nicht erforderlich, alle Schichten des Sandwich-Strukturelementes durch aufeinanderfolgende Beschichtungen zu erzeugen. Vielmehr ist es möglich, z.B. wenn auf eine besondere Oberflächenstruktur beide Seiten des Strukturelementes Wert gelegt wird, die obere, z.B. massive Schicht des Sandwich-Strukturelementes auf einem getrennten Substrat getrennt zu erzeugen und diese vor Eintreten der Klebfreiheit auf die oberste Schicht eines getrennt erzeugten Sandwich-Strukturelementes aufzubringen, bevor diese oberste Schicht Klebfreiheit erlangt hat.

Erfindungsgemäß als Polyurethan-Reaktivmischung geeignet sind alle schnell reagierenden Polyurethan-Reaktivmischungen, wie sie insbesondere für die Reaction-Injection-Molding-Technik (RIM-Technik) entwickelt wurden. Bevorzugt wird als Isocyanat-Komponente ein Semiprepolymer auf Basis MDI und Polyetherpolyol mit 20 bis 30 Gew.-% NCO-Gruppen eingesetzt. Als Polyolkomponente wird vorzugsweise ein Polyetherpolyol mit einer OH-Zahl von 250 bis 400 eingesetzt. Als Treibmittel geeignet sind Wasser als aufgrund der Reaktionen mit dem Isocyanat Kohlendioxid erzeugendes chemisches Treibmittel oder die in der Polyurethanchemie üblichen niedrig siedenden Flüssigkeiten als physikalische Treibmittel. Ferner geeignet sind unter Druck in mindestens einer der Komponenten lösliche Gase, z.B. Kohlendioxid, die beim Entspannen während des Austritts aus dem Mischaggregat unter Aufschäumen freigesetzt werden. Ferner ist die Mitverwendung weiterer Füllstoffe wie Glasfasern, Metallteilchen oder Farbpigmente oder zur Erhöhung der Feuerbeständigkeit eingesetzte Füllstoffe wie Melaminharze oder Phosphorverbindungen nicht ausgeschlossen.

Die Komponenten der Polyurethan-Reaktivmischung werden vorzugsweise in einem solchen Verhältnis miteinander vermischt, daß die Isocyanat-Kennzahl der Mischung 90 bis 130 beträgt.

Bevorzugt werden Systeme eingesetzt, die innerhalb von 1 bis 5 Minuten, vorzugsweise innerhalb 1 bis 3 Minuten nach der Mischung Klebfreiheit erreichen.

Die Erfindung wird nachfolgend anhand der beigefügten Figuren näher erläutert:
Figur 1 zeigt ein für den Sprühauftrag geeignetes Mischaggregat.
Figur 2 zeigt ein erfindungsgemäßes selbsttragendes Strukturelement in Form eines Sanitärartikel-Verbundbauteils mit PMMA.
Figur 3 zeigt ein Verfahren zur Herstellung eines eindimensional endlosen Sandwich-Strukturelementes, bei dem Ober- und Unterschicht des Strukturelementes auf unterschiedlichen Substraten erzeugt werden.

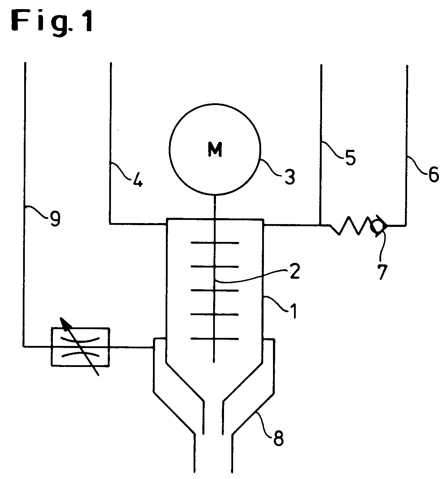

Figur 1 zeigt ein Rührwerksmischaggregat 1 mit Rührer 2, der über den Antriebsmotor 3 angetrieben wird. Im Kopf des Mischaggregats wird über Leitung 4 Isocyanat zugeführt. Über Leitung 5 wird ein Polyol-Glimmer-Gemisch zugeführt. Das über Leitung 6 zugeführte Treibmittel ist über das Ventil 7 zu- und abschaltbar, so daß zwischen Schaum und Massivpolyurethanaustrag umgeschaltet werden kann. Der Auslaß des Mischaggregates 1 mündet in eine Sprühdüse 8, die über Leitung 9 mit Druckluft beaufschlagt wird.

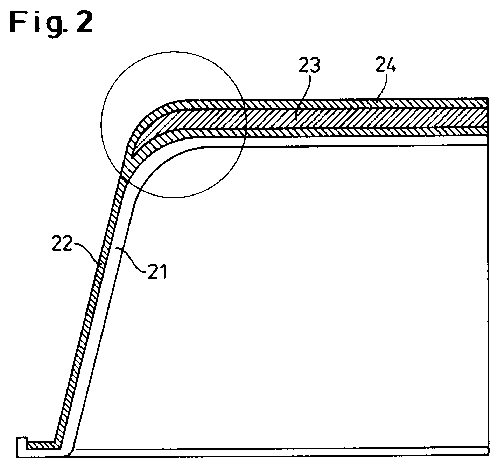

Figur 2 zeigt als Beispiel für einen erfindungsgemäß hergestellten Sanitärartikel den Schnitt durch eine Badewanne. Auf die mit der Öffnung nach unten aufgestellte Struktur aus PMMA mit nach innen gerichteter Sicht- und Gebrauchsoberfläche wird erfindungsgemäß eine erste Massiv-Polyurethanschicht 22 aufgesprüht, anschließend eine Polyurethanschaumschicht 23 und darüber eine weitere Massiv-Polyurethanschicht 24, wobei die Schichten 22, 23 und 24 das selbsttragende Strukturelement bilden, das an der PMMA-Schicht haftet.

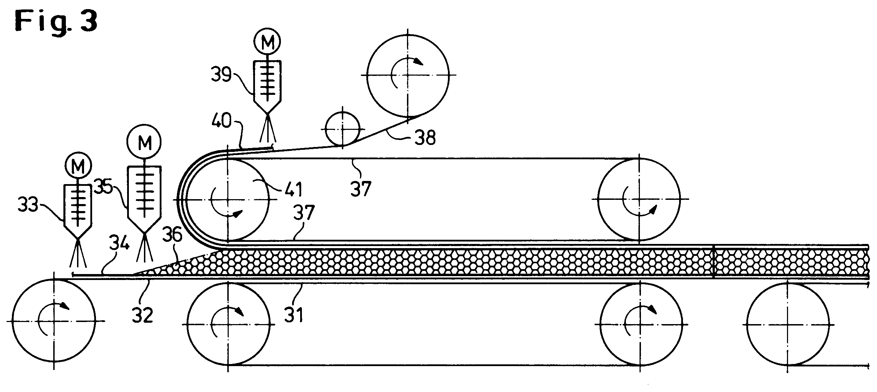

Die Erzeugung eindimensional endloser erfindungsgemäßer Strukturelemente kann in einer Vorrichtung gemäß Figur 3 erfolgen. Diese besteht aus einem unteren Transportband 31, dem eine untere Schutzfolie 32 zugeführt wird. Auf die untere Schutzfolie 32 wird mittels eines ersten, quer zur Transportbandrichtung oszillierenden Misch- und Auftragsorgan 33 eine Massiv-Polyurethanschicht aufgetragen. Unmittelbar im Anschluß daran wird mittels eines zweiten quer zur Transportbandrichtung oszillierenden Misch- und Auftragsaggregat 35 die schäumbare Mischung zur Erzeugung der Polyurethan-Schaum-Zwischenschicht aufgetragen. Die Vorrichtung weist ferner ein oberes umlaufendes Transportband 37 auf, dem von oben eine Schutzfolie 38 zugeführt wird. Oberhalb dieses oberen Transportbandes 37 wird mittels eines quer zur Transportbandrichtung oszillierenden Misch- und Auftragsorgan eine nicht-schäumende Reaktivmischung 40 aufgetragen, die vor dem Aushärten über die Transportwalze 41 des oberen Transportbandes 37 umgelenkt und auf die noch im Steigen begriffene Schaumschicht 36 aufgebracht wird.

## Patentansprüche

1. Verfahren zur Herstellung von selbsttragenden Sandwich-Strukturelementen aus mindestens einer massiven Polyurethanschicht und mindestens einer Polyurethanschaumschicht, dadurch gekennzeichnet, daß mindestens die massiven Polyurethanschichten einen Gehalt von 10 bis 55 Gew.-% Glimmer aufweisen.

2. Verfahren nach Anspruch 1, dadurch gekennzeichnet, daß Polyurethanreaktivmischungen, enthaltend ein Polyetherpolyol mit einer OH-Zahl von 250 bis 400, ein Semiprepolymer auf Basis MDI und Polyetherpolyol mit 20 bis 30 Gew.-% NCO sowie gegebenenfalls Treibmittel, wobei die Mischung eine Isocyanat-Kennzahl von 90 bis 130 aufweist, eingesetzt werden.

3. Verfahren nach Anspruch 1 oder 2, dadurch gekennzeichnet, daß der Auftrag der Schichten des Sandwich-Strukturelementes aufeinanderfolgend auf ein Substrat erfolgt, wobei die jeweils nächste Schicht aufgetragen wird, bevor die darunter liegende Schicht Klebfreiheit erreicht hat.

4. Verfahren nach einem der Ansprüche 1 bis 3, dadurch gekennzeichnet, daß der Auftrag der Schichten mittels eines oder mehrerer Mischaggregate erfolgt, wobei bei mindestens einem der Mischaggregate die zuzuführenden Komponenten der Reaktivmischung während des Auftrags derart veränderbar sind, daß aus diesem Mischkopf alternierend Massiv-Polyurethan und Polyurethanschaum erzeugt werden können.

5. Verfahren nach einem der Ansprüche 1 bis 4, dadurch gekennzeichnet, daß jede Schicht aus mehreren Lagen durch Sprühauftrag erzeugt wird.

6. Verfahren nach einem der Ansprüche 1 bis 5, dadurch gekennzeichnet, daß als Substrat zur Erzeugung der Sandwich-Struktur die Sichtstruktur eines Sanitärartikels aus PMMA eingesetzt wird.

7. Verfahren nach einem der Ansprüche 1 bis 5, dadurch gekennzeichnet, daß in mindestens eine der massiven Polyurethanschichten Glasfaser-Verstärkungsgewebe eingelegt wird.

8. Verfahren nach einem der Ansprüche 1 bis 7 zur Erzeugung einer eindimensional-endlosen Sandwich-Struktur, dadurch gekennzeichnet, daß zumindest eine erste massive Polyurethanschicht und eine erste Polyurethanschaumschicht durch aufeinanderfolgenden Auftrag der Reaktivmasse auf ein unteres Transportband erfolgt, und zumindest eine weitere massive Polyurethanschicht auf der Oberseite des oberen Transportbandes erzeugt wird und durch Umlenken des Transportbandes vor dem Aushärten mit der noch im Steigen begriffenen Schaumschicht auf dem unteren Transportband in Kontakt gebracht wird.

9. Selbsttragendes Sandwich-Strukturelement aus mindestens einer massiven Polyurethanschicht und einer Polyurethanschaumschicht, gekennzeichnet durch einen Gehalt von 10 bis 55 Gew.-% Glimmer zumindest in der Massivschicht.

10. Verbundstruktur, enthaltend ein selbsttragendes Sandwich-Strukturelement aus mindestens einer massiven Polyurethanschicht und einer Polyurethanschaumschicht, wobei mindestens die massive Polyurethanschicht 10 bis 55 Gew.-% Glimmer enthält.
